# FASCICULE DE BREVET EUROPEEN

(11) **EP 0 521 786 B1**
(45) Date de publication et mention de la délivrance du brevet: **26.04.1995**
(21) Numéro de dépôt: 92401882.3
(22) Date de dépôt: 01.07.1992
(51) Int. Cl.: H02K 3/50

(54) **Moteur électrique à courant continu à structure améliorée**
Gleichstrommotor mit verbesserter Baukonstruktion
Direct current electric motor with improved structure

(30) Priorité: 04.07.1991 FR 9108406
(43) Date de publication de la demande: 07.01.1993
(73) Titulaire: ECIA - EQUIPEMENTS ET COMPOSANTS POUR L'INDUSTRIE AUTOMOBILE, F-25400 Audincourt (FR)
(72) Inventeur: Gassmann, Jean-Marie, F-90500 Beaucourt (FR)
(74) Mandataire: Polus, Camille

(56) Documents cités:
- DE-A- 3 331 754
- DE-A- 3 442 348
- DE-U- 8 624 505
- FR-A- 2 651 933

## Description

La présente invention concerne les moteurs électriques à commutation électronique et vise plus particulièrement la structure de ces derniers.

Comme on le sait, les moteurs à commutation électronique se composent, entre autres, d'un carter qui contient un induit bobiné et d'où sort un arbre. Les moyens de commutation de cet induit au lieu d'être constitués par un dispositif électromécanique fait d'un collecteur et de balais sont, dans ce cas, un dispositif électronique avec un module de commande.

Ce type de moteurs pose habituellement un délicat problème de fabrication, de construction et d'assemblage. En effet, il faut procéder à la confection des bobinages qui doivent être logés dans des évidements de l'induit, puis il faut assurer la jonction des bouts des fils des bobinages de cet induit avec le circuit électronique du module de commande et, enfin, il faut pouvoir dissiper la chaleur des composants de puissance du circuit électronique du module de commande.

Une difficulté est liée à la confection des bobinages de l'induit lorsqu'on désire procéder automatiquement et que les évidements de l'induit ne permettent pas de préfabriquer ces bobinages pour qu'ils aient seulement à y être déposés. Dans un tel cas, en particulier si l'on veut pouvoir procéder mécaniquement ou automatiquement, il faut faire appel à une enrouleuse munie d'un bras articulé tournant autour d'un axe qui est alimenté en fil par un dévidoir qui le prélève dans une réserve. Ce bras décrit une trajectoire relativement complexe pour, au fur et à mesure du déroulement du fil, le conformer en boucles qui sont successivement déposées dans les évidements. Pour pouvoir opérer de la sorte, il faut donc que l'induit soit relativement bien dégagé, libre d'accès, de manière à ne pas entraver la course du bras articulé tournant, en particulier par la présence de contacteurs qui recevront les bouts des fils de chaque bobinage.

Une difficulté est soulevée par la jonction des bouts des fils des bobinages avec le circuit électronique du module de commande pour laquelle on procède, habituellement, par soudage des bouts de fil à des cosses qui sont associées au circuit électronique. La plupart du temps, compte tenu de la configuration de la structure du moteur, un tel soudage ne peut être fait que manuellement. Dans des moteurs relativement classiques à montage en étoile, il faut procéder à de nombreuses soudures puisque les bobinages de l'induit sont multiples et que chaque bobinage nécessite deux soudures. Une telle opération, qu'il est tout particulièrement difficile d'automatiser, nécessite donc une très grande habileté et demande du temps. Et il faut se rappeler que pour cette opération, les bouts des fils sont alors dépourvus de soutien matériel, sont en quelque sorte "dans le vide" ou "en l'air", ce qui la rend particulièrement délicate d'autant plus qu'il faut procéder dans un espace fort restreint et d'accès mal commode. En outre, quelle que soit l'habileté de l'opérateur, les soudures sont sujettes à des défauts de contact. Par exemple, ces soudures peuvent être dites "sèches", c'est-à-dire que le décapant du flux de soudure isole en fait le fil de la cosse au lieu d'assurer la continuité électrique.

Pour résoudre une autre difficulté, on utilise souvent pour le dispositif électronique un substrat isolant qui porte un circuit imprimé conducteur sur lequel sont posés, fixés et connectés les composants du circuit électronique du module de commande. Un tel substrat, après avoir été équipé, est habituellement placé à proximité d'un des flasques d'extrémité du carter du moteur et, de préférence, au voisinage de sa face interne. Toutefois, ce circuit comportant des composants de puissance qu'il faut refroidir afin d'éviter leur échauffement qui serait destructeur, on fait en sorte que le substrat isolant soit transpercé d'orifices et que les composants de puissance soient fixés directement sur le flasque du moteur, au travers de ses orifices; de la sorte ce flasque de par sa masse et de par sa nature métallique sert de radiateur pour évacuer les calories produites dans les composants de puissance au cours du fonctionnement. Le fait d'avoir à scinder le circuit électronique de manière que certains de ces composants ne soient plus sur le substrat lui-même mais montés directement sur un flasque, impose des opérations supplémentaires de mise en place, de fixation et ensuite de raccordement électrique par soudage de ces composants au circuit imprimé du substrat. On imagine facilement que ceci complique aussi les opérations de montage et d'assemblage et est aussi source de malfaçons.

Une technique qui permet de résoudre certaines des difficultés énumérées précédemment est, par exemple, exposée dans le document FR-A-2 651 933 au nom de la Demanderesse. Toutefois, la technique qui y est exposée ne permet pas de procéder à un bobinage, à une connection puis à un assemblage automatiques.

Le but de l'invention est de remédier pratiquement à l'ensemble de ces difficultés grâce à un moteur à commutation électronique à structure améliorée.

L'invention a pour objet un moteur à commutation électronique constitué, entre autres, d'un carter avec un corps, de flasques destinés à recevoir au moins un palier, d'un arbre monté dans le ou les paliers, d'un induit bobiné, de moyens de commutation avec un connecteur constitué notamment d'un support isolant destiné à être porté par l'induit pour recevoir les bouts des fils des bobinages de l'induit destinés à être reliés électriquement à des contre-plots d'un circuit imprimé et avec un module de commande fait d'un substrat isolant qui porte ce circuit imprimé destiné à recevoir des composants y compris ceux de puissance de circuits électroniques et qui est de préférence directement appliqué et maintenu en contact intime contre la face intérieure d'un flasque, et dans lequel ce support isolant est monté sur cet arbre, ce support isolant et cet arbre sont munis d'un détrompeur qui n'autorise qu'une seule orientation en rotation et fixe cette dernière et qui assure aussi l'orientation relative en rotation des bouts des fils des bobinages de l'induit et contre-plots tout en permettant un coulissement axial relatif de ces support isolant et arbre et où ce coulissement axial relatif est possible au moins jusqu'à la fin de l'opération de fixation des bouts des fils des bobinages. Ce moteur est notamment caractérisé en ce que le support isolant de forme annulaire porte à sa périphérie une couronne bordée d'un côté par une bordure latérale de diamètre moindre, en ce que cette couronne est aménagée pour former des dents à profil rectangulaire et dont chaque intervalle qui les sépare est muni en son milieu d'un champignon dont le pied est plus haut que la profondeur de l'intervalle et dont le chapeau surplombe à la fois les dents qui l'entourent et la bordure et en ce que la bordure est pourvue de fentes disposées à l'aplomb des pieds.

D'autres particularités de l'invention apparaîtront à la lecture de la description et des revendications qui suivent ainsi qu'à l'examen du dessin annexé, donné seulement à titre d'exemple, où :

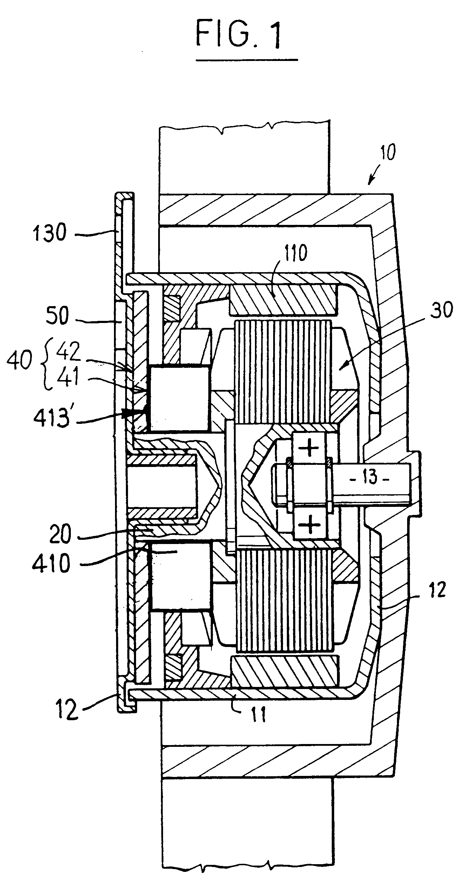

- la Figure 1 est une coupe méridienne axiale schématique d'un moteur selon l'invention;

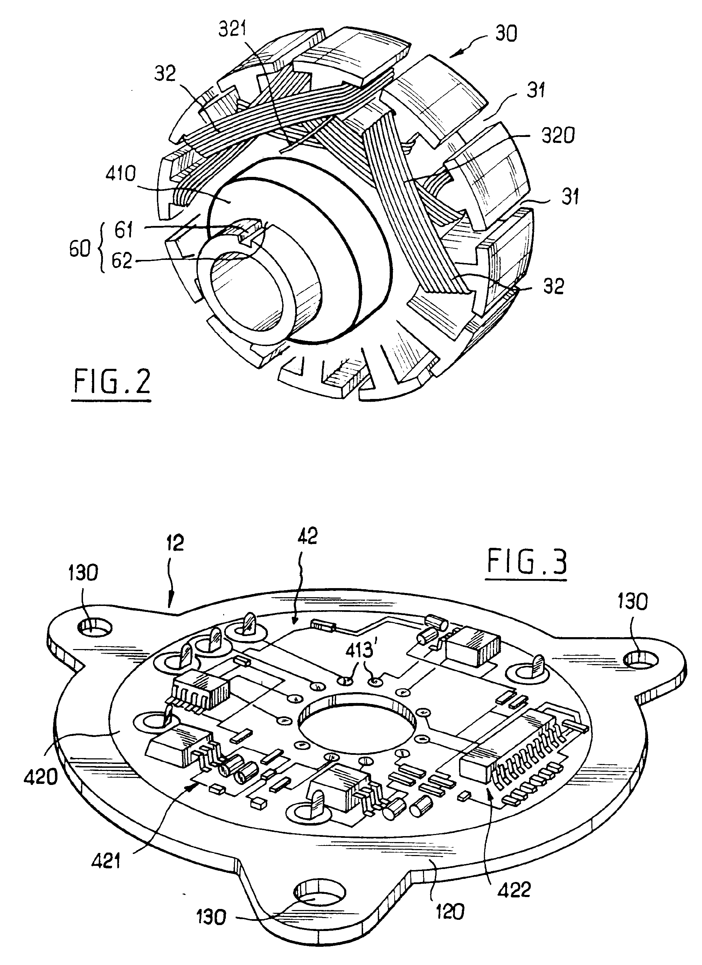

- la Figure 2 est une vue perspective de l'induit terminé prêt à être réuni au flasque de la Figure 3 ;
- la Figure 3 est une vue perspective partielle schématique d'un flasque équipé de son module de commande ;
- la Figure 4 est une vue de détail partielle d'un support isolant d'un connecteur selon l'invention ;
- la Figure 5 est une autre vue de détail de ce support isolant de ce connecteur, en coupe selon la ligne V-V de la Figure 4.

Les moteurs à commutation électronique étant bien connus dans la technique, seul sera décrit ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation.

Comme on le voit en examinant les figures du dessin, un moteur à commutation électronique suivant l'invention comprend, entre autres, un carter 10, un arbre 20, un induit bobiné 30 associé à cet arbre, des moyens de commutation 40. Ce moteur est aussi équipé d'un bornier 50 pour le relier à une source d'énergie électrique, comme il est classique, ainsi que d'un détrompeur 60 dont on comprendra par la suite le rôle.

Pour la commodité de l'exposé, on décrira successivement chacun de ces constituants d'un moteur à commutation électronique selon l'invention.

Le carter 10 comprend un corps 11 approximativement cylindrique, et des flasques d'extrémité 12 relativement plans. L'un au moins de ces flasques porte un palier 13, par exemple à billes, dont un seul est dessiné, comme il est classique.

Ce carter 10 reçoit l'arbre 20 et l'induit 30 bobiné. Cet arbre 20 est porté par le ou les paliers. Cet induit bobiné comprend des évidements 31 dans lesquels sont disposés des bobinages 32 faits d'un fil 320 dont les deux bouts 321 doivent être reliés à des cosses ou analogues. Ceci est relativement classique. Dans le mode de réalisation particulier représenté, l'arbre et l'induit bobiné sont fixes alors qu'une partie de ce carter est, elle, mobile en rotation. Du fait de cette configuration, l'un des flasques n'est pas directement relié au corps de manière à pouvoir tourner avec un inducteur, par exemple des aimants permanents 110, qu'il porte; l'autre des flasques porte les moyens de commutation, l'induit et l'arbre, et ce flasque reste immobile, fixé qu'il est par exemple à l'aide de boulons, non dessinés, engagés dans des trous 130.

Les moyens de commutation 40 sont portés par l'un des flasques 12, ici par le flasque fixe auquel est aussi fixé le bornier 50.

Comme on le voit, les moyens de commutation 40 comprennent un connecteur 41 et un module de commande 42.

Le connecteur 41 comprend un support isolant 410 sur lequel sont placés les bouts 321 des fils 320 des bobinages 32 de l'induit à raccorder électriquement à des contre-plots 413′ d'un circuit imprimé pour assurer la continuité électrique, comme on le comprendra par la suite. Ce connecteur forme en quelque sorte une fiche à broches multiples.

Le module de commande 42 est fait d'un substrat 420 isolant qui porte le dessin d'un circuit imprimé 421 conducteur destiné à recevoir des composants y compris les composants de puissance d'un circuit électronique 422. Comme on peut le voir, ce substrat 420 est appliqué directement contre la face intérieure 120 d'un flasque 12 et est maintenu en contact intime avec ce dernier de manière que le circuit imprimé et les composants soient apparents. Le substrat isolant est par exemple une feuille mince en résine polyimide dont l'une des faces est revêtue d'une couche de cuivre où par photogravure on a fait apparaître le réseau conducteur du circuit imprimé y compris s'il y a lieu les contre-plots 413′ et dont l'autre des faces est collée sur la face du flasque.

Lorsqu'on procède à la confection des bobinages 32 avec une enrouleuse mécanique, par exemple robotisée, il faut que son bras, articulé et tournant suivant un axe, puisse suivre au moins deux évidements 31 successifs pour y déposer des spires de fil 320. Pour confectionner les bobinages, il faut donc que ce bras ne soit pas entravé dans sa course, en particulier par le support isolant 410 qui recevra les bouts 321 du fil 320 qui seront soudés, brasés, sertis à chaud, ou raccordés électriquement de toute autre manière courante classique aux moyens de commutation.

Pour permettre ce dégagement, au moins momentané, de l'induit 30 et faciliter la confection automatique des bobinages 32, on utilise un connecteur 41 qui comprend un support isolant 410 annulaire qui est enfilé sur l'arbre 20 de manière à pouvoir y coulisser sans pour autant pouvoir tourner par rapport à ce dernier. Pour ce faire, on utilise un détrompeur 60 qui n'autorise qu'une seule orientation relative en rotation et fixe cette dernière tout en permettant un coulissement axial relatif de ces support isolant 410 et arbre 20. Ce détrompeur assure donc une mise en repérage biunivoque des bouts des fils des bobinages particuliers qui permettra ultérieurement la mise en correspondance correcte avec les contre-plots 413′. Ce détrompeur 60 est fait d'éléments mâles 62 et d'éléments femelles 61 complémentaires, par exemple du type rainure-languette. Dans le mode de réalisation illustré, la rainure est pratiquée sur l'arbre 20, par exemple sous la forme d'une saignée périphérique axiale alors que la languette est portée par le support isolant 410 annulaire, par exemple sous la forme d'une protubérance saillante radiale à la périphérie intérieure et dont le profil de la section droite est complémentaire de celui de celle de cette saignée.

Il est clair que cette configuration du détrompeur n'est pas la seule utilisable. Ce détrompeur peut utiliser le nombre de paires de pôles du moteur, leurs symétries éventuelles pour en tirer partie afin, par exemple, de ne pas se servir d'une répartition uniforme des contre-plots ou d'une distribution régulière de contre-plots mâles et femelles.

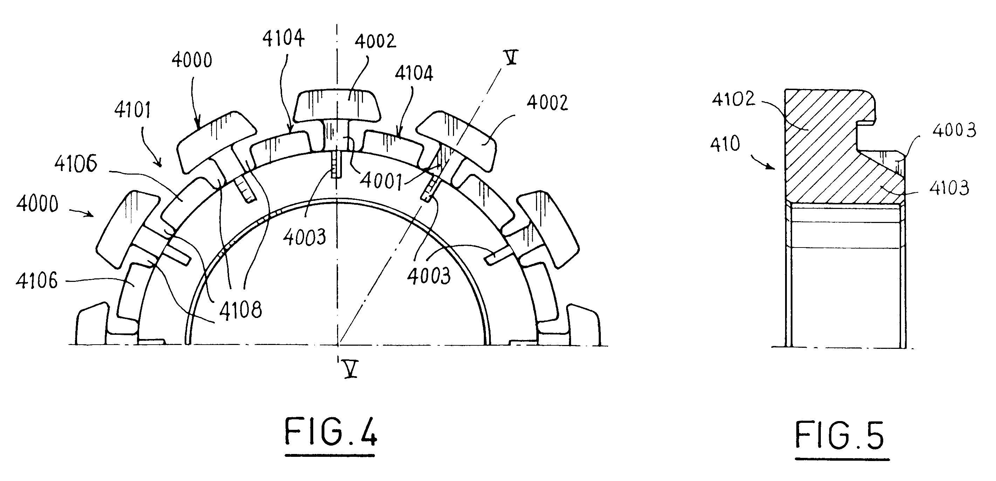

Comme on peut l'observer sur les figures du dessin, le support isolant 410 a une configuration torique ou une forme annulaire. Le support isolant 410 porte à sa périphérie 4101 extérieure une couronne 4102 qui est bordée, d'un côté par une bordure 4103 latérale. Le diamètre propre de la bordure 4103 est moindre que celui de la couronne 4102. La couronne 4102 est aménagée pour former des dents 4104 à profil 4106 rectangulaire. Chaque intervalle 4108 qui sépare les dents est muni en son milieu d'un champignon 4000. Comme on le voit, le champignon 4000 a un pied 4001 qui est plus haut que la profondeur de l'intervalle 4108 et un chapeau 4002 qui surplombe à la fois les dents 4104 qui l'entourent et la bordure 4103. Ce champignon affleure de préférence le côté du support isolant dépourvu de bordure 4103. Le chapeau 4002 a, de préférence, une configuration dont la section droite est en trapèze isocèle curviligne. La bordure 4103 est pourvue de fentes 4003 disposées à l'aplomb des pieds 4001. La profondeur des fentes 4003 va croissant à partir du pied; ces fentes ont un fond de préférence rectiligne incliné d'environ 30° sur l'axe du support isolant (voir Figure 5).

Ces champignons permettent un bobinage aisé du fil car la configuration de leur tête autorise une présentation correcte du fil au moment de l'opération ainsi que son maintien, et la souplesse du pied autorise l'insertion du fil dans l'interstice entre dent et pied; les largeur, profondeur et géométrie des fentes notamment sont adaptées au fil à recevoir. Il en est de même de la taille du surplomb du chapeau relativement à la partie de dent sous-jacente, qui est adaptée au fil à recevoir.

Les dents et champignons sont ou ne sont pas régulièrement réparties; toutefois, de préférence ils sont équidistants.

Le support isolant est par exemple confectionné par moulage d'une matière synthétique.

On comprend tout l'intérêt de la solution apportée par l'invention puisque le connecteur assure à lui seul la jonction entre les bobinages de l'induit et les moyens de commutation.

On saisit donc que le connecteur selon l'invention joue le rôle d'une interface entre les points d'accrochage des bouts des fils des bobinages lors du processus de bobinage, et le circuit électronique tout en garantissant une liaison électrique, un repérage angulaire des entrées et sorties des bobinages par rapport au circuit électronique du fait de l'existence du détrompeur qui autorise un déplacement axial, au moins momentané, du support isolant pour permettre les déplacements du bras d'une enrouleuse.

Grâce à l'invention, il est possible de fabriquer industriellement et automatiquement un moteur électrique à commutation électronique. De par l'existence du détrompeur, il est aussi possible d'assurer une mise en registre des flans de tôle de l'induit pour favoriser leur empilage correct, bien orienté. Le support isolant est mis en place et maintenu initialement à l'écart du paquet de tôles lors de la confection des bobinages. Lorsque ces derniers sont terminés, les bouts du fil de chacun d'eux sont reliés électriquement s'il y a lieu par soudage par exemple avec un flux d'étain, soudage électrique ou de toute autre manière. Puis le support isolant est repoussé contre les tôles de l'induit afin de réduire l'encombrement de l'ensemble. Cette réduction de l'encombrement axial est très prisée puisque en général, la recherche de croissance des puissances des moteurs implique l'utilisation de fil de plus grand diamètre qui sont, bien sûr, plus difficile à travailler. La solution suivant l'invention permet d'utiliser un arbre dont la longueur de la partie saillante ne dépasse pas la moitié, environ, de son diamètre extérieur alors que pour les moteurs traditionnels cette longueur excède habituellement une fois et demie environ ce diamètre. Il suffit alors d'approcher l'induit bobiné du module de commande équipé de ses contre-plots en utilisant toujours le détrompeur. On saisit donc que cette dernière opération peut aussi être faite automatiquement à l'aide d'un robot ou d'un automate programmable.

On perçoit donc tout l'intérêt que présente un moteur à commutation électronique suivant l'invention puisqu'il permet une fabrication industrielle grandement automatisée.

Un moteur électrique à commutation électronique à structure améliorée selon l'invention convient particulièrement bien aux ventilateurs du type de ceux utilisés par exemple dans les automobiles. Dans un tel cas, le carter avec son corps sont constitués par un "bol" associé à l'hélice du ventilateur qui vient coiffer le rotor du moteur. Cette hélice est emmanchée sur l'arbre qui sert à la solidarisation de l'ensemble.

## Revendications

1. Moteur à commutation électronique constitué, entre autres, d'un carter (10) avec un corps (11), de flasques (12) destinés à recevoir au moins un palier (13), d'un arbre (20) monté dans le ou les paliers, d'un induit bobiné (30), de moyens de commutation (40) avec un connecteur (41) constitué d'un support isolant (410) destiné à être porté par l'induit (30) pour recevoir les bouts (321) des fils (320) des bobinages (32) de l'induit (30) à relier électriquement à des contre-plots (413′) d'un circuit imprimé (421) et avec un module de commande (42) fait d'un substrat (420) isolant qui porte ce circuit imprimé (421) destiné à recevoir des composants y compris ceux de puissance de circuits électroniques (422) et qui est de préférence directement appliqué et maintenu en contact intime contre la face intérieure d'un flasque (12), et dans lequel ce support isolant (410) est monté sur cet arbre (20), ce support isolant (410) et cet arbre (20) sont munis d'un détrompeur (60) qui n'autorise qu'une seule orientation en rotation et fixe cette dernière et assure aussi l'orientation relative en rotation de ces bouts (321) des fils (320) et contre-plots (413′) tout en permettant un coulissement axial relatif de ces support isolant (410) et arbre (20) et où ce coulissement axial relatif est possible au moins jusqu'à la fin de l'opération de fixation des bouts (321) des fils (320) des bobinages (32), moteur caractérisé en ce que le support isolant (410) de forme annulaire porte à sa périphérie (4101) une couronne (4102) bordée d'un côté par une bordure (4103) latérale de diamètre moindre, en ce que cette couronne (4102) est aménagée pour former des dents (4104) à profil (4106) rectangulaire et dont chaque intervalle (4108) qui les sépare est muni en son milieu d'un champignon (4000) dont le pied (4001) est plus haut que la profondeur de l'intervalle (4108) et dont le chapeau (4002) surplombe à la fois les dents (4104) qui l'entourent et la bordure (4103) et en ce que la bordure (4103) est pourvue de fentes (4003) disposées à l'aplomb des pieds (4001).

2. Moteur selon la revendication 1, caractérisé en ce que le chapeau (4002) a une configuration dont la section droite est en trapèze isocèle curviligne.

3. Moteur selon la revendication 1 ou 2, caractérisé en ce que le champignon (4000) affleure le côté du support isolant (410) dépourvu de bordure.

4. Moteur selon l'une quelconque des revendications 1 à 3, caractérisé en ce que la fente (4003) a une profondeur qui va croissant à partir du pied (4001).

5. Moteur selon la revendication 4, caractérisé en ce que le fond de la fente (4003) est rectiligne et incliné de 30° environ sur l'axe du support isolant (410).

6. Moteur selon l'une quelconque des revendications 1 à 5, caractérisé en ce que la taille du surplomb du chapeau (4002) relativement à la partie de dent (4104) sous-jacente est adaptée au fil (320) à recevoir.

## Patentansprüche

1. Elektronisch kommutierter Motor, der u.a. gebildet wird durch ein Gehäuse (10) mit einem Korpus (11), Flanschen (12) zur Aufnahme wenigstens eines Lagers (13), eine in dem Lager oder den Lagern montierte Welle (20), einen gewickelten Anker (30), eine Kommutationseinrichtung (40) mit einem Verbinder (41), der gebildet wird durch einen isolierenden Träger (410), der dazu bestimmt ist, durch den Anker (30) gehalten zu werden, um die Enden (321) der Drähte (320) der Wicklungen (32) des Ankers (30) aufzunehmen, die elektrisch mit Gegenpolen (413′) einer gedruckten Schaltung (421) und mit einem Steuermodul (42) zu verbinden sind, das durch ein isolierendes Substrat (420) gebildet wird, das die gedruckte Schaltung (421) trägt, die dazu bestimmt ist, Komponenten einschließlich von Leistungskomponenten von elektronischen Schaltungen (422) aufzunehmen, und das vorzugsweise direkt an der Innenfläche eines Flansches (12) angebracht und damit in engem Kontakt gehalten ist, und wobei der isolierende Träger (410) an der Welle (20) montiert ist, der isolierende Träger (410) und die Welle (20) mit einer Unverwechselbarkeitseinrichtung (60) versehen sind, die nur eine einzige Winkelorientierung zuläßt und diese letztere fixiert und die auch die relative Winkelorientierung der Enden (321) der Drähte (320) und der Gegenpole (413′) sicherstellt, wobei eine relative axiale Gleitbewegung des isolierenden Trägers (410) und der Welle (20) zugelassen wird und wobei diese relative axiale Gleitbewegung wenigstens bis zum Ende des Vorgangs der Befestigung der Enden (321) der Drähte (320) der Wicklungen (32) möglich ist, dadurch gekennzeichnet, daß der ringförmige isolierende Träger (410) an seinem Umfang (4101) einen Kranz (4102) trägt, der auf einer Seite durch einen seitlichen Rand (4103) mit kleinerem Durchmesser begrenzt ist, und daß dieser Kranz (4102) Zähne (4104) mit rechteckigem Profil (4106) bildet, bei denen jedes sie trennende Intervall (4108) in der Mitte mit einem Pilz (4000) versehen ist, dessen Fuß (4001) höher ist als die Tiefe des Intervalls (4108) und dessen Kopf (4002) sowohl über die ihn umgebenden Zähne (4104) als auch über den Rand (4103) auskragt, und daß der Rand (4103) mit entsprechend den Füßen (4001) angeordneten Schlitzen (4003) versehen ist.

2. Motor nach Anspruch 1, dadurch gekennzeichnet, daß der Kopf (402) eine Form hat, deren Querschnitt ein krummliniges gleichschenkliges Trapez ist.

3. Motor nach Anspruch 1 oder 2, dadurch gekennzeichnet, daß der Pilz (4000) mit der Seite des isolierenden Trägers (410) bündig ist, die nicht mit dem Rand versehen ist.

4. Motor nach einem der Ansprüche 1 bis 3, dadurch gekennzeichnet, daß der Schlitz (4003) eine Tiefe hat, die von dem Fuß (4001) aus zunimmt.

5. Motor nach Anspruch 4, dadurch gekennzeichnet, daß der Boden des Schlitzes (4003) rechteckig und um etwa 30° zur Achse des isolierenden Trägers (410) geneigt ist.

6. Motor nach einem der Ansprüche 1 bis 5, dadurch gekennzeichnet, daß die Größe der Auskragung des Kopfes (4002) in bezug auf den darunterliegenden Teil des Zahnes (4104) an den aufzunehmenden Draht (320) angepaßt ist.

## Claims

1. A motor with electronic switching, comprising inter alia a casing (10) with a body (11), flanges (12) intended to receive at least one bearing (13), a shaft (20) mounted in the bearing or bearings, a wound armature (30), switching means (40) having a connector (41) formed by an insulating support (410) intended to be carried by the armature (30) for receiving the ends (321) of the wires (320) of the windings (32) of the armature (30) to be connected electrically to counter pads (413′) of a printed circuit (421), and having a control module (42) formed by an insulating substrate (420) which carries the said printed circuit (421) intended to receive components, including those for powering electronic circuits (422), and which is preferably directly applied and held in close contact with the inner surface of a flange (12), and wherein the said insulating support (410) is mounted on the said shaft (20), the said insulating support (410) and the said shaft (20) are provided with a polarising slot (60) which only permits one direction of rotation and determines the latter and also ensures the relative direction of rotation of the said ends (321) of the wires (320) and counter pads (413′), while permitting relative axial sliding between the said insulating support (410) and shaft (20), and wherein this relative axial sliding is possible at least until the end of the operation of fixing the ends (321) of the wires (320) of the windings (32), the said motor being characterised in that the annular insulating support (410) carries, on its periphery (4101), a crown (4102) bordered on one side by a lateral rim (4103) of smaller diameter, in that the said crown (4102) is arranged to form teeth (4104) of rectangular profile (4106) and each gap (4108) which separates them is provided in its centre with a mushroom (4000), the foot (4001) of which is longer than the depth of the gap (4108) and the head (4002) of which overhangs both the teeth (4104) surrounding it and the rim (4103), and in that the rim (4103) is provided with slots (4003) arranged at the base of the feet (4001).

2. A motor according to claim 1, characterised in that the cross-section of the head (4002) has the shape of a curved isosceles trapezium.

3. A motor according to claim 1 or 2, characterised in that the mushroom (4000) is level with the side of the insulating support (410) without a rim.

4. A motor according to any one of claims 1 to 3, characterised in that the depth of the slot (4003) increases from the foot (4001).

5. A motor according to claim 4, characterised in that base of the slot (4003) is rectilinear and inclined at approximately 30° to the axis of the insulating support (410).

6. A motor according to any one of claims 1 to 5, characterised in that the size of the overhang of the head (4002) relative to the tooth portion (4104) located below is adapted to the wire (320) to be received.
